Europäisches Patentamt

European Patent Office

Office européen des brevets

(19)

(11) **EP 0 796 351 B1**

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(21) Anmeldenummer: **95938301.9**

(22) Anmeldetag: **30.11.1995**

(51) Int Cl.6: **C21C 5/52**, F27B 3/08, H05B 7/11

(86) Internationale Anmeldenummer:
**PCT/AT95/00237**

(87) Internationale Veröffentlichungsnummer:
**WO 96/17092 (06.06.1996 Gazette 1996/26)**

(54) **ANLAGE ZUR HERSTELLUNG VON METALLSCHMELZEN MIT EINEM STROMVERSORGUNGSNETZ MIT RELATIV GERINGER KURZSCHLUSSLEISTUNG**

SMELTING INSTALLATION WITH A CURRENT SUPPLY NETWORK WITH A RELATIVELY LOW SHORT-CIRCUIT RATING

FONDERIE A RESEAU D'ALIMENTATION EN COURANT A TENUE AU COURT-CIRCUIT RELATIVEMENT FAIBLE

(84) Benannte Vertragsstaaten:
**AT BE CH DE DK ES FR GB GR IE IT LI LU MC NL PT SE**

(30) Priorität: **02.12.1994 AT 2247/94**

(43) Veröffentlichungstag der Anmeldung:
**24.09.1997 Patentblatt 1997/39**

(73) Patentinhaber: **VOEST-ALPINE INDUSTRIEANLAGENBAU GMBH**
**4020 Linz (AT)**

(72) Erfinder:
- **AIGNER, Bernhard**
  **. (AT)**
- **BERGER, Harald**
  **A-4020 Linz (AT)**
- **MITTAG, Peter**
  **A-4030 Linz (AT)**

(74) Vertreter: **Kopecky, Helmut, Dipl.-Ing.**
**Kopecky & Schwarz Patentanwälte**
**Wipplingerstrasse 32/22**
**1010 Wien (AT)**

(56) Entgegenhaltungen:
**EP-A- 0 023 058          EP-A- 0 548 041**

- **STAHL UND EISEN, Bd. 114, Nr. 5, 16.Mai 1994 Seiten 37-41, 133, XP 000448184 KOHLE S 'GEGENUBERSTELLUNG VON GLEICHSTROM- UND DREHSTROM-LICHTBOGENOFEN COMPARISON OF DIRECT-CURRENT AND THREE-PHASE A.C. ARC FURNACES'**
- **STEEL TIMES - INCORPORATING IRON & STEEL, 1.Oktober 1992 Seiten S13-S14, XP 000321531 SPATNY W ET AL 'POWER SUPPLIES FOR DC FURNACES'**
- **RADEX RUNDSCHAU, April 1982, Heft 1/2, Radenthein, AT, Seiten 724-756, H.Berger, "Die elektrische und mechanische Auslegung des Elektrolichtbogenofens".( von der Anmelderin genannt)**

**Beschreibung**

Die Erfindung betrifft eine Anlage zur Herstellung von Metallschmelzen, insbesondere Stahlschmelzen aus Schrott, mit einem an ein Stromversorgungsnetz angeschlossenen Gleichstrom-Lichtbogenofen.

Der Einsatz von Elektro-Lichtbogenöfen zur Herstellung von Metallschmelzen, insbesondere zum Einschmelzen von Schrott, bedingt das Vorhandensein eines entsprechend starken Stromversorgungsnetzes, da es beim Betrieb von Elektro-Lichtbogenöfen infolge von Kurzschlüssen, z.B. verursacht durch nachstürzenden Schrott, Eisenschwamm, etc., zu einem Variieren der Lastströme eines Elektro-Lichtbogenofens in einem weiten Bereich kommen kann. Dies führt zu Netzrückwirkungen, deren unangenehmste Art in sogenannten Flicker-Erscheinungen zu sehen ist. Hierbei handelt es sich um Änderungen der Lichtstärke von vom Stromversorgungsnetz des Elektro-Lichtbogenofens versorgten Beleuchtungseinrichtungen aufgrund von Netzspannungs-Schwankungen (vgl. Radex-Rundschau, Heft 1/2, 1982, "Die elektrische und mechanische Auslegung des Elektrolichtbogenofens", Seiten 724 bis 756).

Es ist bekannt, zur Vermeidung von Flicker-Erscheinungen den Anschlußpunkt eines Elektro-Lichtbogenofens an das Stromversorgungsnetz, das auch allgemeine öffentliche Verbraucher versorgt, den sogenannten PCC (Point of Common Coupling), auf ein höheres Spannungsniveau - was gleichbedeutend ist einem höheren Leistungsniveau des Stromversorgungsnetzes - zu heben. Weiters ist es für Wechsel- und Drehstrom-Lichtbogenöfen bekannt, eine dynamische Kompensation zur Verringerung der Rückwirkungen auf das Stromversorgungsnetz vorzusehen (Radex-Rundschau, Heft 2, 1984, "Elektrische Auslegung und Ausrüstung von Lichtbogenofenanlagen", Seiten 360 bis 378). Falls die zur Vermeidung von Flicker-Erscheinungen erforderliche Kurzschlußleistung des Netzes auch bei Vorsehen des PCC im höchsten Spannungsniveau des Stromversorgungsnetzes nicht verfügbar ist, ist eine solche Flicker-Kompensationseinrichtung, die den schnell veränderlichen Blindleistungsbedarf von Elektro-Lichtbogenöfen ausgleicht, unumgänglich.

All diese Überlegungen wurden jedoch lediglich für Drehstrom-Lichtbogenöfen angestellt. Für einen Gleichstrom-Lichtbogenofen stellen sich die Netzrückwirkungen infolge der Gleichstromtechnik anders dar als für Drehstrom-Lichtbogenöfen. So lassen sich bei Gleichstrom-Lichtbogenöfen die Blindleistungsschwankungen reduzieren, so daß die Flicker-Rückwirkungen wesentlich geringer sind. Es ist bekannt, Flicker-Rückwirkungen bei einem Gleichstrom-Lichtbogenofen dadurch zu vermeiden, indem man dafür Sorge trägt, daß die Netz-Kurzschlußleistung mindestens die Hälfte der für einen Wechsel- oder Drehstrom-Lichtbogenofen gleicher Nenn-Leistung errechneten Netz-Kurzschlußleistung beträgt. Dies bedingt jedoch nach wie vor eine relativ hohe Netz-Kurzschlußleistung und kann zu Schwierigkeiten führen, insbesondere dann, wenn ein PCC mit dem geforderten Leistungsniveau nicht zur Verfügung steht. In diesem Fall hat man sich mit einem Netzausbau durch zusätzliche Freileitungen oder mittels dynamischer Kompensationsanlagen beholfen oder man hat die Ofenleistung stark reduziert und eine Mehrzahl von Lichtbogenöfen, die zeitversetzt arbeiten, in Betracht gezogen. All dies ist jedoch konstruktiv und kostenmäßig aufwendig.

Die Erfindung bezweckt die Vermeidung dieser Nachteile und Schwierigkeiten und stellt sich die Aufgabe, eine Anlage zur Herstellung von Metallschmelzen zu schaffen, wobei auch ein Stromversorgungsnetz mit relativ geringer Kurzschlußleistung Verwendung finden kann, u.zw. ohne Einsatz einer dynamischen Kompensationsanlage. Das Stromversorgungsnetz bzw. der PCC und der Gleichstrom-Lichtbogenofen sollen bei größtmöglicher Ofenleistung optimal aufeinander abgestimmt sein.

Diese Aufgabe wird erfindungsgemäß

- durch einen Gleichstrom-Lichtbogenofen mit zwei oder meh Elektroden und
- durch ein Stromversorgungsnetz, dessen Netz-Kurzschlußleistung $S_k$ mindestens so groß ist wie

$$S_k \geq 40 \times \sqrt[3]{\sum_{i=1}^{n} S_i^3},$$

gelöst, worin $S_i$ die Nenn-Einzelleistung einer Elektrode bedeutet und i einen Index für die Elektroden darstellt, der von 1 bis zur maximalen Anzahl der Elektroden des Gleichstrom-Lichtbogenofens variiert. Ein Gleichstrom-Lichtbogenofen mit mehreren Elektroden ist aus der AT-B - 396.483 bekannt.

Die Erfindung beruht auf der Erkenntnis, daß bei einem Gleichstrom-Lichtbogenofen mit zwei oder mehre Elektroden die Flicker-Problematik ganz erheblich von der eines Gleichstrom-Lichtbogenofen mit nur einer einzigen Elektrode abweicht; die Ofenleistung kann, ohne Flickererscheinungen zu verursachen, wesentlich erhöht werden, oder es kann die Anzahl der Gleichstrom-Lichtbogenöfen reduziert werden. Dies ist damit zu begründen, daß jeder der Lichtbögen eines Gleichstrom-Lichtbogenofens mit mehreren Elektroden nur mehr einen Teil des Gesamtstroms führt und daß, wie aus umfangreichen Untersuchungen hervorgegangen ist, niemals alle Elektroden gleichzeitig unter Kurzschluß stehen.

Für besonders ungünstige Betriebszustände des Gleichstrom-Lichtbogenofens empfiehlt es sich, die Netz-Kurzschlußleistung mindestens so groß zu bemessen wie

$$S_k \geq 40 \times \sqrt[2]{\sum_{i=1}^{n} S_i^2}.$$

Vorzugsweise ist die Netz-Kurzschlußleistung geringer als die Hälfte einer für einen Drehoder Wechselstrom-Lichtbogenofen gleicher Nenn-Leistung errechnete minimale Netz-Kurzschlußleistung.

Die Erfindung ist nachfolgend anhand der Beschreibung näher erläutert:

Ein Drehstrom-Lichtbogenofen mit einer Nennleistung von 160 MVA erfordert gemäß dem Stand der Technik (Radex-Rundschau, Heft 1/2, 1982, "Die elektrische und mechanische Auslegung des Elektrolichtbogenofens", Seiten 724 bis 756) ein Netz mit einer Netz-Kurzschlußleistung $S_k$ von 12.800 MVA. Diese wird wie folgt berechnet:

$$S_k \geq k_{AC} \times S_N.$$

Hierin bedeuten

$k_{AC}$ = Faktor für Wechsel- bzw. Drehstrom-Lichtbogenöfen = 80
$S_N$ = Nennleistung des Drehstrom-Lichtbogenofens.

Sieht man anstelle des Drehstrom-Lichtbogenofens einen Gleichstrom-Lichtbogenofen gleicher Nennleistung mit einer zentral angeordneten Elektrode vor, so ergibt sich für einen solchen Gleichstrom-Lichtbogenofen eine Mindest-Netz-Kurzschlußleistung $S_k$ von 6.400 MVA. Diese Netz-Kurzschlußleistung wird wie folgt berechnet:

$$S_k \geq k_{DC} \times S_N$$

$k_{DC}$ : = Faktor für Gleichstrom-Lichtbogenöfen = ½ × $k_{AC}$ = 40

$S_N$ = Nennleistung des Gleichstrom-Lichtbogenofens

Erfindungsgemäß wird ein Gleichstrom-Lichtbogenofen gleicher Nennleistung mit vier Elektroden eingesetzt und ein flickerfreies Stromversorgungsnetz sichergestellt, wobei die minimale Netz-Kurzschlußleistung bei 3.200 MVA liegt. Diese minimale Netz-Kurzschlußleistung $S_k$ ergibt sich wie folgt:

$$S_k \geq k_{DC} \times \sqrt[2]{\sum_{i=1}^{4} S_i^2} = 40 \times \sqrt[2]{4 \times 40^2} = 3.200$$

Erfindungsgemäß ergibt sich somit zweierlei: nämlich erstens, daß für ein Stromversorgungsnetz mit nicht allzu hoher Netz-Kurzschlußleistung das Vorsehen eines Gleichstrom-Lichtbogenofens mit mehreren Elektroden zweckmäßig ist, und zweitens, daß für einen Gleichstrom-Lichtbogenofen mit einer Mehrzahl von Elektroden die Installation eines Stromversorgungsnetzes mit nur einer geringen Netz-Kurzschlußleistung bzw. ein Festlegen des PCC auf einem relativ niedrigen Spannungsniveau des Stromversorgungsnetzes ausreicht. Dies kann insbesondere für Gebiete mit relativ schwachen Stromversorgungsnetzen von großer Bedeutung sein. Weiters empiehlt sich die Erfindung, wenn von Seiten der Stromversorgungs-Unternehmungen nur ungewöhnlich niedrige Störpegel zugelassen werden.

**Patentansprüche**

1. Anlage zur Herstellung von Metallschmelzen, insbesondere Stahlschmelzen aus Schrott, mit einem an ein Stromversorgungsnetz angeschlossenen Gleichstrom-Lichtbogenofen mit zwei oder mehr Elektroden, gekennzeichnet durch ein Stromversorgungsnetz, dessen Netz-Kurzschlußleistung $S_k$ mindestens so groß ist wie

$$S_k \geq 40 \times \sqrt[3]{\sum_{i=1}^{n} S_i^3} \, ,$$

worin $S_i$ die Nenn-Einzelleistung einer Elektrode bedeutet und i einen Index für die Elektroden darstellt, der von 1 bis zur maximalen Anzahl der Elektroden des Gleichstrom-Lichtbogenofens variiert.

2. Anlage nach Anspruch 1, dadurch gekennzeichnet, daß die Netz-Kurzschlußleistung $S_k$ mindestens so groß ist wie

$$S_k \geq 40 \times \sqrt[2]{\sum_{i=1}^{n} S_i^2} \, .$$

3. Anlage nach Anspruch 1 oder 2, dadurch gekennzeichnet, daß die Netz-Kurzschlußleistung geringer ist als die Hälfte einer für einen Dreh- oder Wechselstrom -Lichtbogenofen gleicher Nenn-Leistung errechnete minimale Netz-Kurzschlußleistung.

## Claims

1. A plant for producing metal melts, in particular steel melts from scrap, comprising a direct-current electric arc furnace connected to an electricity supply system and having at least two electrodes, characterised by

  • an electricity supply system whose system short-circuit capacity $S_k$ is at least equal to

$$S_k \geq 40 \times \sqrt[3]{\sum_{i=1}^{n} S_i^3} \, ,$$

wherein $S_i$ is the nominal power per electrode and i represents an index for the electrodes that varies from 1 up to the maximum number of electrodes in the direct-current electric arc furnace.

2. A plant according to claim 1, characterised in that the system short-circuit capacity $S_k$ is at least equal to

$$S_k \geq 40 \times \sqrt[2]{\sum_{i=1}^{n} S_i^2} \, .$$

3. A plant according to claim 1 or 2, characterised in that the system short-circuit capacity is less than half the minimum system short-circuit capacity calculated for a rotating-or alternating-current electric arc furnace of the same nominal power.

## Revendications

1. Installation de production de métal fondu, en particulier d'acier fondu, à partir de déchets ou ferrailles, avec un four à arc à courant continu, raccordé à un réseau d'alimentation électrique, comportant deux électrodes ou plus, caractérisée par un réseau d'alimentation électrique dont la capacité en court-circuit réseau $S_k$ est au moins de la valeur

$$S_k \geq 40 \times \sqrt[3]{\sum_{i=1}^{n} S_i^3} \, ,$$

expression dans laquelle $S_i$ est la puissance nominale individuelle d'une électrode et i et un indice désignant les électrodes, variant de 1 jusqu'au nombre maximal d'électrodes du four à arc à courant continu.

2. Installation selon la revendication 1, caractérisée en ce que la capacité en court-circuit du réseau $S_k$ est au moins de la valeur $S_k$

$$S_k \geq 40 \times \sqrt[2]{\sum_{i=1}^{n} S_i^2} \, .$$

3. Installation selon la revendication 1 ou 2, caractérisée en ce que la capacité en court-circuit du réseau est inférieure à la moitié de la capacité en court-circuit du réseau minimale, calculée pour un four à arc à courant rotatif ou alternatif de même puissance nominale.